# EUROPEAN PATENT APPLICATION

(11) **EP 4 102 683 A1**
(43) Date of publication of application: **14.12.2022**
(21) Application number: 21178225.5
(22) Date of filing: 08.06.2021
(51) Int. Cl.: H02K 1/20, H02K 1/18, H02K 3/24, H02K 5/20, H02K 7/18, H02K 9/197, H02K 9/02

(54) **COOLING OF AN ELECTRIC GENERATOR**

(71) Applicant: Siemens Gamesa Renewable Energy A/S, 7330 Brande (DK)
(72) Inventor: Nilifard, Reza, 5000 Odense C (DK); Taras, Petrica, Sheffield S1 4SF (GB); Azar, Ziad, Sheffield S10 4ED (GB); Zhu, Zi-Qiang, Sheffield S10 5TR (GB)
(74) Representative: SGRE-Association

(57) **Abstract**

An electric generator (10) comprises a stator (20) and a rotor (30), the rotor (30) being rotatable with respect to the stator (20) about a rotation axis (Y), an air gap (15) being interposed between the stator (20) and the rotor (30). The electrical generator (10) further comprises:
at least a liquid cooling arrangement (100) for cooling the stator (20), and
and least an air-cooling arrangement (200) for circulating air in the air gap (15).

## Description

### Field of invention

The present invention relates to an electric generator including a stator and a rotor and having arrangements for cooling the stator and the rotor. The present invention may be particularly, but not exclusively, applied to an electric generator of a wind turbine.

### Art Background

An electric generator or motor, such as an electric generator installed in a wind turbine, typically comprises a rotor which rotates relative to a stator. In a permanent-magnet electric generator installed in a wind turbine rotor the rotor comprises a plurality of permanent magnets. The stator typically includes a stator body having stator slots extending along an axial direction of the stator and an electric circuit comprising a plurality of windings housed in the slots. The windings comprise end-windings axially protruding from the axial ends of the stator body. The windings of the above-described electric generator or motor may be classified as concentrated or distributed. In a concentrated winding scheme, each coil is wound around on tooth, i.e. housed in two adjacent slots. In a distributed winding scheme, each coil is housed in different slots, which are not adjacent to each other.

Typically, in all the above-described types of electric generators, high operating temperatures may be experienced, for example due to losses generated in the stator windings. The power output of the generator may be therefore limited by the temperature of stator windings. Furthermore, higher winding temperatures reduce the generator component lifespan and result in lower generator efficiency and reliability. It is further effective to also reduce the temperature of the rotor magnets, which in turn leads to higher torque and efficiency. Therefore, it is desirable to mitigate the temperature of stator windings and the rotor magnets, in order to increase both efficiency and lifespan.

### Summary of the invention

Scope of the present invention is to provide cooling arrangements for an electrical generator, which may be used for optimizing or improving the amount of heat removed from the stator and rotor.

This scope is met by the subject matter according to the independent claim. Advantageous embodiments of the present invention are described by the dependent claims.

According to the invention, it is provided an electric generator comprising a stator and a rotor, the rotor being rotatable with respect to the stator about a rotation axis, an air gap being interposed between the stator and the rotor, wherein the electrical generator further comprises at least a liquid cooling arrangement for cooling the stator, and at least an air-cooling arrangement for circulating air in the air gap.

This invention can be efficiently adapted to an electric generator of a wind turbine. In particular, the invention may be adapted to wind turbines having direct drive generators including permanent magnets, where high torque densities result in a higher wind turbine output power but on the other hand, it may also determine high operating temperatures.

Advantageously, the combination of the liquid cooling arrangement and the air-cooling arrangement achieves a high cooling performance to reduce and control stator and rotor temperatures. This results in a significant efficiency increase and more AEP (Annual Energy Production). Lower installations costs with respect to the prior art may also achieved, i.e. due to higher torque and power densities. The lifespan of the generator components (e.g. insulation) may be increased and thereby generator reliability improved.

According to the embodiments of the invention, the stator includes a stator body including a stator yoke, a plurality of teeth protruding according to a radial direction from the stator yoke and a plurality of slots, each slot being delimited circumferentially by two adjacent teeth and radially extending from the stator yoke. The stator body may comprise a lamination stack constituted by a plurality of lamination sheets stacked one after another along the rotation axis. The stator may comprise a stator support structure for supporting by the stator body. In such embodiments, the liquid cooling arrangement may comprise at least one cooling pipe for circulating a cooling liquid, the cooling pipe being in thermal contact with the stator for cooling the stator, the cooling pipe being provided in the stator body or in the support structure. The cooling pipes may be implemented as a modular solution, which may be configurable and changeable according to cooling requirements or removable, for example for maintenance purposes.

According to embodiments of the invention, the stator body extends axially along the rotation axis between a first axial end and a second axial end. According to one possible embodiment, the air-cooling arrangement comprises an air-cooling inlet at the first axial end for letting cooling air in the air gap and an air-cooling outlet at the second axial end for receiving air from the air gap. In such embodiment air ducts through the stator are not necessary, thus achieving a higher torque density.

According to another possible embodiment, the stator body extends axially along the rotation axis between a first axial end and a second axial end, the air-cooling arrangement comprising a first inlet at the first axial end for letting cooling air in the air gap and a second inlet at the second axial end for letting cooling air in the air gap, the air-cooling arrangement comprising at least one air-cooling outlet through the stator for receiving air from the air gap.

According to embodiments of the invention, the stator body includes a plurality of stator axial portions separated by cooling ducts, two adjacent stator axial portions being separated by a respective cooling duct, each cooling ducts connecting the air gap to the air-cooling outlet(s) of the air-cooling arrangement. Duct area and number of ducts per segment can be changed to achieve the maximum efficiency.

According to embodiments of the invention, the stator includes a plurality of windings housed in the plurality of slots and a plurality of end-windings axially protruding from the first axial end or the second axial end of the stator body, each end-winding having a curved shape and connecting the windings in two slots of said plurality of slots, each end-winding being arranged in the air-cooling arrangement for receiving a flow of cooling air. The present invention may provide an efficient cooling of the end-windings.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic section of a wind turbine including an electric generator according to the present invention.
- Figure 2: shows an exploded view of an electric generator with a stator according to the present invention.
- Figure 3: shows an axonometric view of a segment of the stator of the electric generator of Fig. 2.
- Figure 4: shows a longitudinal section of a portion of the electric generator in Fig. 2.
- Figure 5: shows a cross-sectional view of a portion of the electric generator in Fig. 2.
- Figure 6: shows the longitudinal section of Fig.2 including a first embodiment of cooling arrangements according to the present invention.
- Figure 7: shows the longitudinal section of Fig.2 including a second embodiment of cooling arrangements according to the present invention.

### Detailed Description

The illustrations in the drawings are schematic. It is noted that in different figures, similar or identical elements are provided with the same reference signs.

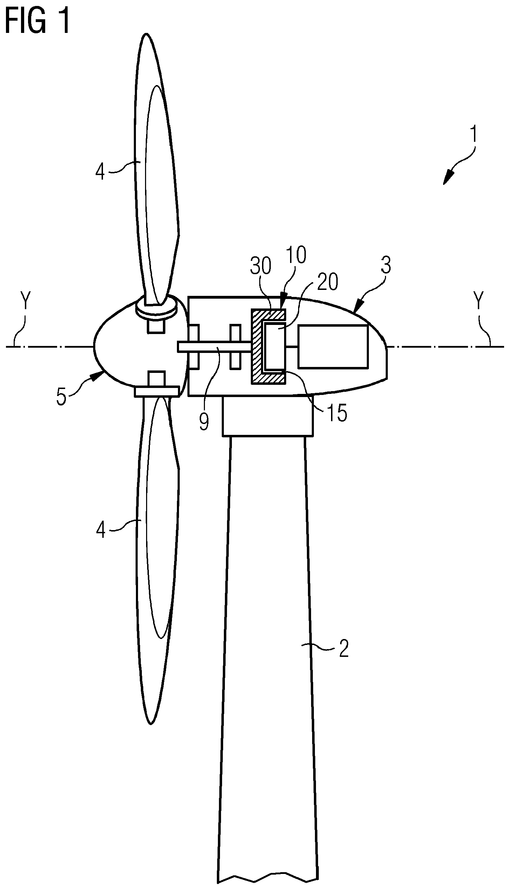

**Figure 1** shows a wind turbine 1 according to the invention. The wind turbine 1 comprises a tower 2, which is mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis Y. When not differently specified, the terms axial, radial and circumferential in the following are made with reference to the longitudinal axis Y. The blades 4 extend radially with respect to the rotational axis Y. The wind turbine 1 comprises a permanent magnet electric generator 10.

According to other possible embodiments of the present invention (not represented in the attached figures), the present invention may be applied to other types of electric machine design, e.g. induction, synchronous, etc. The present invention may be applied to both integral-slot and fractional-slot electric generators. The wind rotor 5 is rotationally coupled with the permanent magnet generator 10 by means of a rotatable main shaft 9. The rotatable main shaft 9 extends along the rotational axis Y. According to other possible embodiments of the present invention (not represented in the attached figures), the wind rotor 5 is rotationally coupled directly with the permanent magnet generator 10 (direct-drive generator configuration). The permanent magnet electric generator 10 includes a stator 20 and a rotor 30. The rotor 30 is rotatable with respect to the stator 20 about the rotation axis Y. The rotor 30 is radially external with respect the stator 20 and rotatable about the rotational axis Y. A circumferential air gap 15 is provided between the stator 20 and the rotor 30.

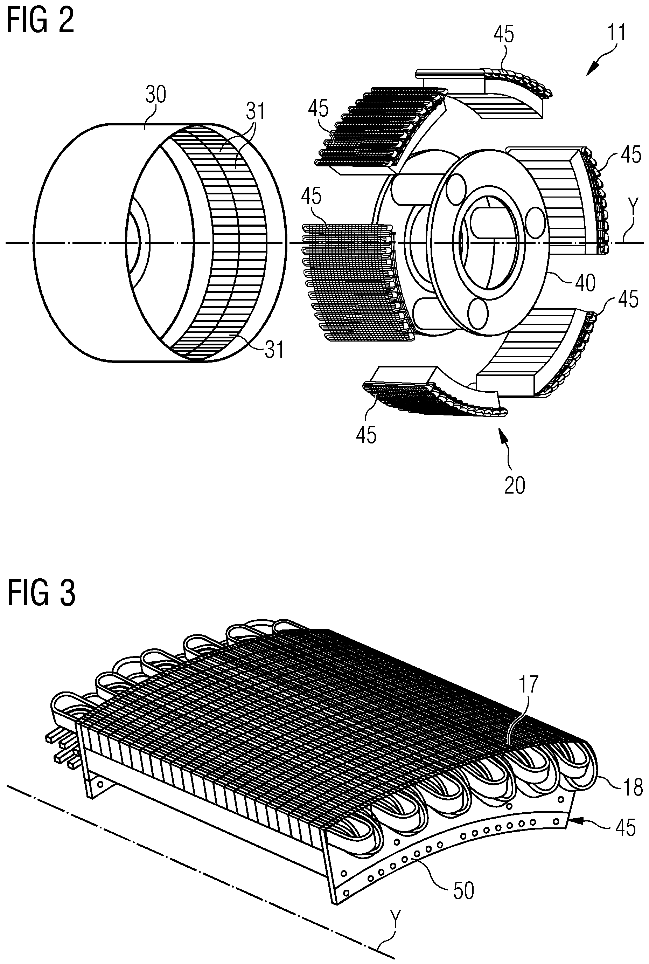

**Figures 2** to **5** show views of the electrical generator 10 with the rotor 30 and the stator 20. The stator 20 comprises a stator body 50 and a stator support structure 40 for supporting by the stator body 50. The stator support structure 40 has a cylindrical shape about the longitudinal rotation axis Y. The stator body 50 has a segmented structure comprising six segments 45 joined together at respective circumferential ends. Each segment 45 has a circumferential angular extension of 60°. According to other embodiments of the present invention, the stator 20 comprises a plurality of segments having a number of segments different from six. According to another possible embodiment of the present invention, the stator 20 is not segmented, i.e. the stator includes one single segment covering the entire angular extension of 360°. The stator body 50 includes a stator yoke 51, a plurality of teeth 52 protruding according to a radial direction from the stator yoke 51 and a plurality of slots 53, each slot 53 being delimited circumferentially by two adjacent teeth 52. The stator body 5) extends axially along the rotation axis Y between a first axial end 21 and a second axial end 22. The stator 20 further comprises coil windings 17 housed in the plurality of slots 53 a plurality of end-windings 18. Each end winding 18 having a curved shape and connecting the windings 17 in two slots 53 of said plurality of slots 53. The stator 20 further comprises wedges 54 at the radial end of the slots 53, for separating the windings 17 from the air gap 15. According to embodiments of the invention, a concentrated windings scheme may be used, where each end-winding 18 connects the axial ends of two concentrated windings 17 in two respective circumferentially adjacent slots 53. In other embodiments of the present invention (fig. 3) a distributed windings scheme may be used. The stator body 50 may have a laminated structure 60 comprising a plurality of laminations stacked along the longitudinal axis Y. The laminations are identical, and each includes a plurality of teeth alternated to a plurality of slots.

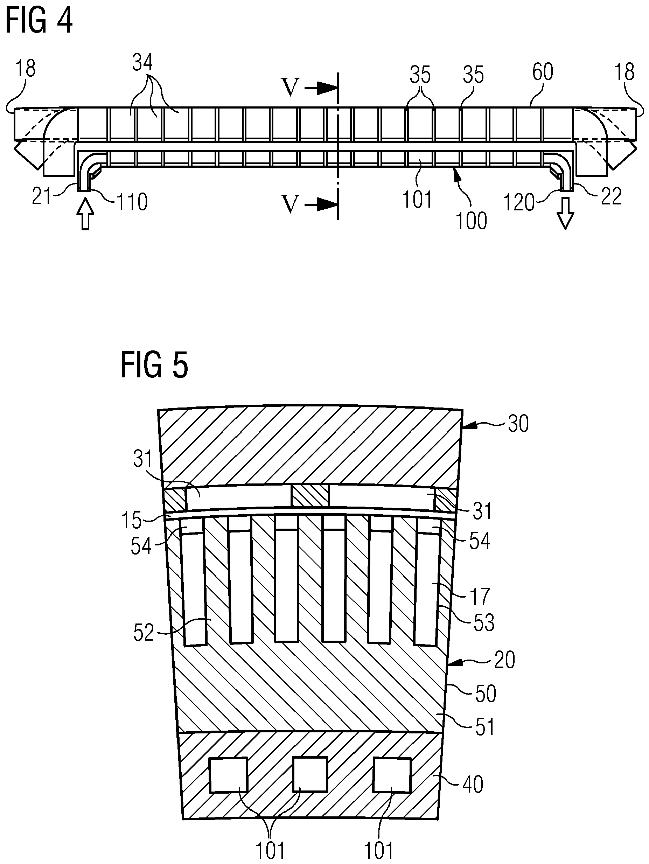

In embodiments of the present invention (as shown in Fig. 4), the stator segment 10 comprises a plurality of stator axial portions 34 which are arrayed along the longitudinal rotation axis Y. The stator axial portions 34 are separated from each other by radial cooling air ducts 35. In embodiments of the present invention, as better clarified in the following, the radial air ducts are not present.

The rotor 30 comprises a plurality of circumferentially distributed rotor permanent magnets 31. The permanent magnets 31 radially face the air gap 15.

The electric generator 10 further comprises at least a liquid cooling arrangement 100 for cooling the stator 20, and at least an air-cooling arrangement 200 for circulating air in the air gap 15. The air-cooling arrangement 200 is usable for cooling the component of the electric generator 10 facing the air gap 15, in particular the permanent magnets 31, the windings 17 and the end-windings 18.

**Figures 4** to **6** show more in detail a first embodiment of the invention including a plurality of radial cooling air ducts 35. The liquid cooling arrangement 100 comprises a plurality cooling pipes (three cooling pipes 101 are shown in fig. 5) for circulating a cooling liquid, for example water. In another embodiment of the invention (not shown), only one cooling pipe 101 may be present. The cooling pipes 101 are in thermal contact with the stator 20 for cooling the stator 20 and are provided in support structure 40. Alternatively, the cooling pipes 101 may be provided in the stator body 50, for example across the yoke 51, at a radial position close to the slots 53 and the windings 17 housed therein (embodiment not shown in the attached drawings). In particular, the cooling pipes 101 may be provided across the lamination stack 60 which may constitute the stator body 50. Each cooling pipe 101 extends from an inlet 110 to which the cooling fluid is provided to an outlet 120 from which the cooling fluid is collected after the thermal exchange with the stator 20 has been performed. The cooling pipe(s) 101 may be, at least partially, oriented parallel to the rotation axis Y. The cooling pipes 101 may have a round, square, rectangular, or oval cross section, depending on flow and/or thermal exchange rate to be achieved.

The air-cooling arrangement 200 comprises a first inlet 211 at the first axial end 21 for letting cooling air in the air gap 15 and a second inlet 212 at the second axial end 22 for letting cooling air in the air gap 15. The air-cooling arrangement 200 comprising an air-cooling outlet 220 through the stator 20 for receiving the air from the air gap 15. Each cooling duct 35 connects the air gap 15 to the air-cooling outlet 220 of the air-cooling arrangement 200. The air of the air-cooling arrangement 200 flows along the permanent magnets 31, the windings 17 and the end-windings 18 and, after the thermal exchange with such elements have been performed, flows radially through cooling ducts 35 and to the air-cooling outlet 220.

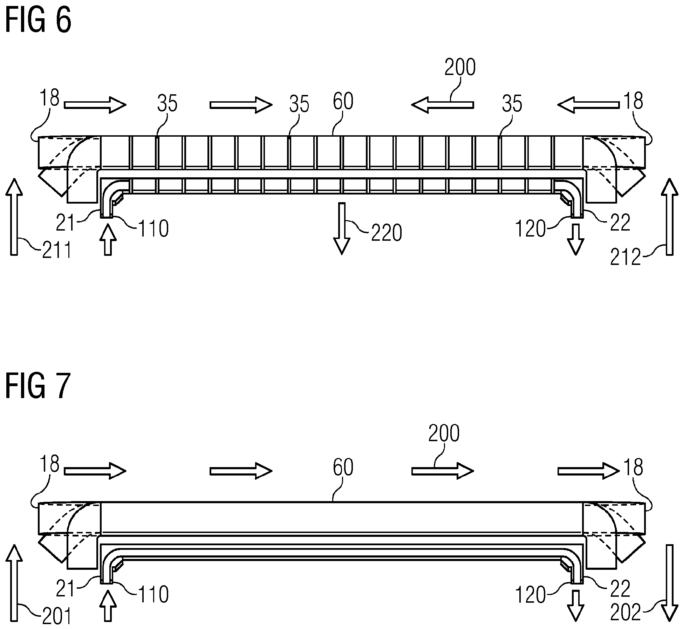

**Figure 7** shows a second embodiment of the invention not requiring a plurality of radial cooling air ducts 35. In such embodiment the air-cooling arrangement 200 comprising an air-cooling inlet 201 at the first axial end 21 for letting cooling air in the air gap 15 and an air-cooling outlet (202) at the second axial end 22 for receiving air from the air gap 15, after the thermal exchange with the permanent magnets 31, the windings 17 and the end-windings 18 has been performed.

## Claims

1. Electric generator (10) comprising a stator (20) and a rotor (30), the rotor (30) being rotatable with respect to the stator (20) about a rotation axis (Y), an air gap (15) being interposed between the stator (20) and the rotor (30), wherein the electric generator (10) further comprises:
at least a liquid cooling arrangement (100) for cooling the stator (20), and
at least an air-cooling arrangement (200) for circulating air in the air gap (15).

2. Electric generator (10) as claimed in claim 1, wherein the stator (20) includes a stator body (50) including a stator yoke (51), a plurality of teeth protruding according to a radial direction from the stator yoke and a plurality of slots, each slot being delimited circumferentially by two adjacent teeth and radially extending from the stator yoke (51) .

3. Electric generator (10) as claimed in claim 2, wherein the stator body (50) comprises a lamination stack (60) constituted by a plurality of lamination sheets stacked one after another along the rotation axis (Y).

4. Electric generator (10) as claimed in claim 1 or 2, wherein the stator (20) comprises a stator support structure (40) for supporting by the stator body (50).

5. Electric generator (10) as claimed in any of the claims 2 to 4, wherein the liquid cooling arrangement (100) comprises at least one cooling pipe (101) for circulating a cooling liquid, the cooling pipe (101) being in thermal contact with the stator (20) for cooling the stator (20), the cooling pipe (101) being provided in the stator body (50) or in the support structure (40).

6. Electric generator (10) as claimed in claim 5, wherein the cooling pipe (101) are at least partially oriented parallel to the rotation axis (Y).

7. Electric generator (10) as claimed in any of the previous claims 2 to 6, wherein the stator body (50) extends axially along the rotation axis (Y) between a first axial end (21) and a second axial end (22), the air-cooling arrangement (200) comprising an air-cooling inlet (201) at the first axial end (21) for letting cooling air in the air gap (15) and an air-cooling outlet (202) at the second axial end (22) for receiving air from the air gap (15).

8. Electric generator (10) as claimed in any of the previous claims 2 to 6, wherein the stator body (50) extends axially along the rotation axis (Y) between a first axial end (21) and a second axial end (22), the air-cooling arrangement (200) comprising a first inlet (211) at the first axial end (21) for letting cooling air in the air gap (15) and a second inlet (212) at the second axial end (22) for letting cooling air in the air gap (15), the air-cooling arrangement (200) comprising at least one air-cooling outlet (220) through the stator (20) for receiving air from the air gap (15).

9. Electric generator (10) as claimed in claim 8, wherein the stator body (50) includes a plurality of stator axial portions (51) separated by cooling ducts (35), two adjacent stator axial portions (54) being separated by a respective cooling duct (35), each cooling ducts (35) connecting the air gap (15) to the air-cooling outlet(s) (220) of the air-cooling arrangement (200).

10. Electric generator (10) as claimed in any of the claims 7 to 9, wherein the stator (20) includes a plurality of windings (17) housed in the plurality of slots and a plurality of end-windings (18) axially protruding from the first axial end (21) or the second axial end (22) of the stator body (50), each end-winding (18) having a curved shape and connecting the windings (17) in two slots of said plurality of slots, each end-winding (18) being arranged in the air-cooling arrangement (200) for receiving a flow of cooling air.

11. Electric generator (10) as claimed in claim 10, wherein the windings (17) are concentrated windings, each end-winding (18) connecting the windings (17) in two circumferentially adjacent slots (30).

12. Electric generator (10) as claimed in any of the previous claims, wherein the stator (20) comprises a plurality of circumferential segments (45) joined together at respective circumferential ends.

13. A wind turbine (1) comprising the electric generator (10) according to any of the previous claims.

14. The wind turbine (1) as claimed in claim 13, wherein the wind turbine (1) is a direct-drive wind turbine.
